(19) **Europäisches Patentamt / European Patent Office / Office européen des brevets**

(11) **EP 3 716 145 A1**

(12) # EUROPEAN PATENT APPLICATION

(43) Date of publication:
30.09.2020 Bulletin 2020/40

(51) Int Cl.:
*G06K 9/00* (2006.01)

(21) Application number: 20165183.3

(22) Date of filing: 24.03.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 27.03.2019 JP 2019060978

(71) Applicant: KABUSHIKI KAISHA TOYOTA JIDOSHOKKI
Kariya-shi, Aichi-ken (JP)

(72) Inventor: Ishizaki, Masataka
Aichi-ken (JP)

(74) Representative: Hoffmann Eitle
Patent- und Rechtsanwälte PartmbB
Arabellastraße 30
81925 München (DE)

(54) **OBJECT DETECTION DEVICE AND METHOD**

(57) An object detection device is configured to obtain a disparity image from images captured by a stereo camera, and to derive coordinates of objects in a world coordinate system from the disparity image. The object detection device is configured to derive an expected traveling region in the world coordinate system from steering angle information and dimension information of a forklift. The object detection device is configured to extract, as a priority object, an object located in the expected traveling region in the world coordinate system. The object detection device is configured to determine whether the priority object is a human by giving priority to the priority object over an object that differs from the priority object.

Fig.4

```
START
  │
  ▼
Obtain disparity image          ~S1
  │
  ▼
Derive coordinates of feature points   ~S2
  │
  ▼
Derive coordinates of object
in world coordinate system      ~S3
  │
  ▼
Derive expected traveling region   ~S4
  │
  ▼
Extract priority object         ~S5
  │
  ▼
Set priority level              ~S6
  │
  ▼
Human detection process         ~S7
  │
  ▼
END
```

EP 3 716 145 A1

**Description**

BACKGROUND

1. Field

The present disclosure relates to an object detection device and an object detection method.

2. Description of Related Art

A movable object such as a vehicle is equipped with an object detection device for detecting objects, including humans and obstacles. The object detection device described in Japanese Laid-Open Patent Publication No. 2017-151815 divides an image captured by an imaging device into multiple regions and extracts identification target images from these regions. The object detection device performs a human detection process on the identification target images. The identification target images are extracted through image processing, such as luminance gradient detection and the Hough transform. The regions are set based on at least one of the turning direction, the turning speed, the traveling direction, and the traveling speed.

The technology disclosed in the Japanese Laid-Open Patent Publication No. 2017-151815 performs the human detection process on a large region, causing a large processing load on the object detection device.

SUMMARY

It is an object of the present disclosure to provide an object detection device that reduces the processing load.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an object detection device configured to be mounted on a vehicle is provided. The object detection device includes a disparity image obtainment portion configured to obtain, from an image captured by a stereo camera, a disparity image in which each of pixels is associated with disparity, a coordinate deriving portion configured to derive, from the disparity image, coordinates of objects in a world coordinate system, which is a coordinate system in real space, a steering angle obtainment portion configured to obtain steering angle information of the vehicle, an expected traveling region deriving portion configured to derive an expected traveling region of the vehicle in the world coordinate system from the steering angle information and dimension information of the vehicle, an extraction portion configured to extract a priority object, which is one of the objects that are located in the expected traveling region in the world coordinate system, and a human determination portion configured to perform a human detection process on coordinates of the objects in the image by giving priority to the priority object over each of the objects that differs from the priority object.

In another general aspect a method for detecting an object using an object detection device configured to be mounted on a vehicle is provided. The method includes: obtaining, from an image captured by a stereo camera, a disparity image in which each of pixels is associated with disparity; deriving, from the disparity image, coordinates of objects in a world coordinate system, which is a coordinate system in real space; obtaining steering angle information of the vehicle; deriving an expected traveling region of the vehicle in the world coordinate system from the steering angle information and dimension information of the vehicle; extracting a priority object, which is one of the objects that are located in the expected traveling region in the world coordinate system; and performing a human detection process on coordinates of the objects in the image by giving priority to the priority object over each of the objects that differs from the priority object.

In yet another general aspect, an object detection device configured to be mounted on a vehicle is provided that includes processing circuitry. The processing circuitry is configured to: obtain, from an image captured by a stereo camera, a disparity image in which each of pixels is associated with disparity; derive, from the disparity image, coordinates of objects in a world coordinate system, which is a coordinate system in real space; obtain steering angle information of the vehicle; derive an expected traveling region of the vehicle in the world coordinate system from the steering angle information and dimension information of the vehicle; extract a priority object, which is one of the objects that are located in the expected traveling region in the world coordinate system; and perform a human detection process on coordinates of the objects in the image by giving priority to the priority object over each of the objects that differs from the priority object.

Other features and aspects will be apparent from the following detailed description, the drawings, and the claims.

BRIEF DESCRIPTION OF THE DRAWINGS

Fig. 1 is a perspective view of a forklift on which an object detection device is mounted.
Fig. 2 is a schematic block diagram of the forklift and a monitoring device.
Fig. 3 is a diagram showing a first image.
Fig. 4 is a flowchart showing a process performed by the object detection device.
Fig. 5 is a diagram showing the coordinates of objects on an XY-plane in the world coordinate system.
Fig. 6 is a diagram for illustrating a method for deriving an expected traveling region.
Fig. 7 is a diagram showing the positional relationship between the objects and the expected traveling region on the XY-plane in the world coordinate system.

DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

An object detection device according to one embodiment is now described.

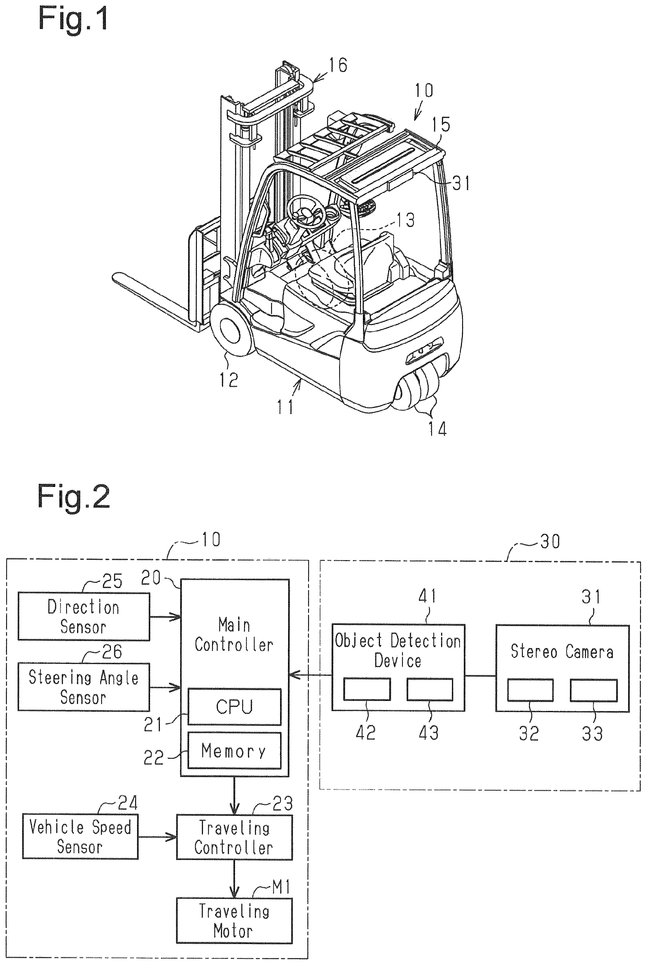

As shown in Fig. 1, a forklift 10, which serves as a vehicle, includes a vehicle body 11, two drive wheels 12 and 13, which are located in the front lower section of the vehicle body 11, and two steered wheels 14, which are located in the rear lower section of the vehicle body 11, and a material handling device 16. The drive wheels 12 and 13 are spaced apart from each other in the vehicle width direction. The two steered wheels 14 are adjacent to each other in the vehicle width direction. The two steered wheels 14 are aligned with the central position between the drive wheels 12 and 13 in the vehicle width direction. When the two adjacent steered wheels 14 are considered as one steered wheel 14, the forklift 10 is considered as a three-wheel forklift. The vehicle body 11 includes a head guard 15 arranged above the driver's seat. The traveling and material handling of the forklift 10 of the present embodiment are operated by the driver.

As shown in Fig. 2, the forklift 10 includes a main controller 20, a traveling motor M1, a traveling controller 23 for controlling the traveling motor M1, a vehicle speed sensor 24, a direction sensor 25, and a steering angle sensor 26. The main controller 20 controls traveling and material handling. The main controller 20 includes a CPU 21 and a memory 22, which stores programs for performing various controls.

The direction sensor 25 detects the direction in which the direction lever is operated to instruct the traveling direction. The direction sensor 25 detects, referring to the neutral position, whether the direction lever is operated in the direction of forward movement or in the direction of reverse movement. The direction sensor 25 outputs the detection result to the main controller 20. The steering angle sensor 26 detects the steering angle $\theta 1$ of the steered wheels 14. The steering angle sensor 26 outputs the detection result to the main controller 20.

The CPU 21 of the main controller 20 sends a command to the traveling controller 23 regarding the rotational speed of the traveling motor M1 so that the vehicle speed of the forklift 10 becomes the target speed. The traveling controller 23 of the present embodiment is a motor driver. The vehicle speed sensor 24 of the present embodiment is a rotational speed sensor that detects the number of revolutions of the traveling motor M1 per unit time, in other words, the rotational speed. The vehicle speed sensor 24 outputs the rotational speed of the traveling motor M1 to the traveling controller 23. The traveling controller 23 controls the traveling motor M1 based on the command from the main controller 20 so that the rotational speed of the traveling motor M1 matches the command. The main controller 20 obtains the detection result of the vehicle speed sensor 24 from the traveling controller 23.

The forklift 10 includes a monitoring device 30. The monitoring device 30 includes a stereo camera 31 and an object detection device 41, which detects objects from images captured by the stereo camera 31. As shown in Fig. 1, the stereo camera 31 is arranged on the head guard 15 so as to view the road surface on which the forklift 10 travels from the top of the forklift 10. The stereo camera 31 of the present embodiment captures images of the area behind the forklift 10. The object detection device 41 thus detects objects located behind the forklift 10.

As shown in Fig. 2, the stereo camera 31 includes two cameras 32 and 33. The cameras 32 and 33 may be CCD image sensors or CMOS image sensors, for example. The cameras 32 and 33 are arranged such that their optical axes are parallel. In the present embodiment, the two cameras 32 and 33 are arranged side by side in the horizontal direction. One of the two cameras 32 and 33 is referred to as a first camera 32, and the other is referred to as a second camera 33. When an image captured by the first camera 32 is a first image and an image captured by the second camera 33 is a second image, the same object is captured in the first image and the second image at positions shifted from each other in the lateral direction. Specifically, when one object is captured, there is a shift in the lateral direction between the pixels [px] of the object in the first image and the object in the second image according to the distance between the cameras 32 and 33. The first image and the second image have the same number of pixels and may have the VGA resolution of 640 x 480 [px]. The first and second images are represented by RGB signals.

The object detection device 41 includes a CPU 42 and a storage portion 43, which may consist of a RAM and a ROM. The storage portion 43 stores various programs for detecting objects from images captured by the stereo camera 31. The object detection device 41 may include dedicated hardware, for example, an application specific integrated circuit (ASIC) that executes at least part of various processes. That is, the object detection device 41 may be circuitry including one or more processors that operate according to a computer program, one or more dedicated hardware circuits such as an ASIC, or a combination thereof. The processor includes a CPU and memories such as a RAM, a ROM, and the like. The memories store program codes or instructions configured to cause the CPU to execute processes. The memories, or non-transitory computer readable media, include any type of media that are accessible by general-purpose computers and dedicated computers.

The object detection device 41 may exchange data with the main controller 20 according to a vehicle communication protocol, such as controller area network (CAN) or local interconnect network (LIN).

The object detection process performed by the object detection device 41 is now described. The object detection process is repeated for each predetermined control cycle while the forklift 10 is in an activated state and moving backward. The activated state is a state in which the forklift 10 can travel and handle materials. The detection result of the direction sensor 25 is used to determine whether the forklift 10 is moving backward. The main controller 20 may send a command to the object detection device 41 when the forklift 10 moves backward so as to trigger the object detection device 41 to perform an object detection process. Alternatively, the object detection device 41 may obtain the detection result of the direction sensor 25 from the main controller 20 so as to determine whether to perform an object detection process.

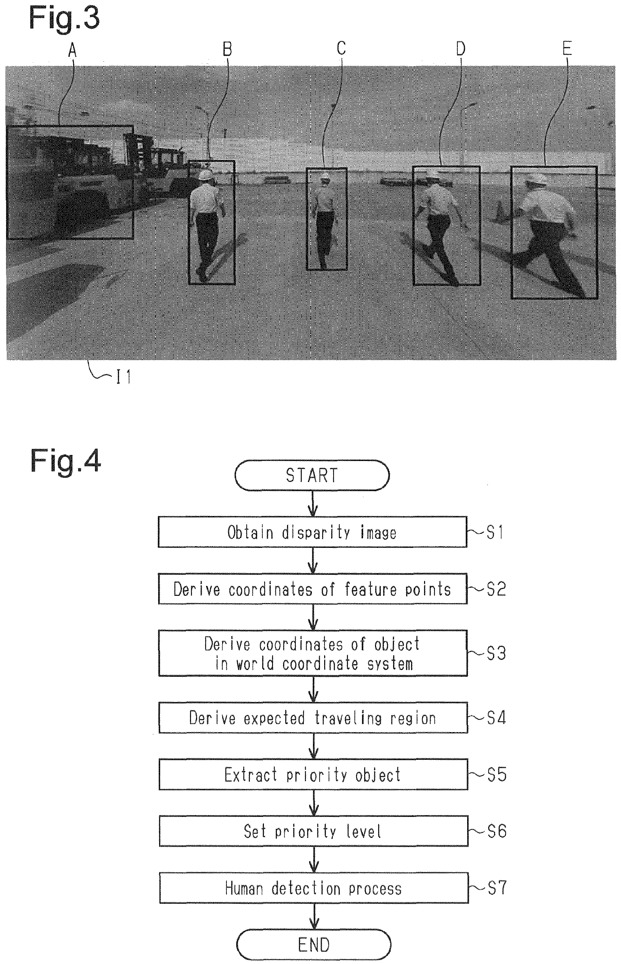

In the example described below, the object detection process is performed on images of the environment shown in Fig. 3 captured by the stereo camera 31. Fig. 3 is a first image I1 obtained by capturing the area behind the forklift 10. As seen in the first image I1, objects A, B, C, D and E, each being a human or an object other than a human, are present behind the forklift 10. The coordinates in the first image I1 where the objects A, B, C, D and E are present are indicated with frames for illustration purposes, but the actual first image I1 does not have any frames.

As shown in Fig. 4, at step S1, the object detection device 41 obtains a disparity image. A disparity image is an image in which each pixel is associated with disparity [px]. The disparity is obtained by comparing the first image I1 with the second image and calculating the distance between the pixel of one feature point in the first image I1 and the pixel of the same feature point in the second image. The feature point may be a part that can be recognized as a boundary, such as an edge of an object. The feature point may be detected from luminance information, for example.

The object detection device 41 obtains a first image I1 and a second image of the same frame from the video captured by the stereo camera 31. The object detection device 41 transforms RGB into YCrCb using the RAM, which temporarily stores each image. The object detection device 41 may perform image processing such as distortion correction and edge enhancement. The object detection device 41 performs stereo matching that calculates disparity by comparing the pixels of the first image I1 and the pixels of the second image for similarity. The stereo matching may be performed using a method that calculates disparity for each pixel, or a block matching method that divides each image into blocks with multiple pixels and calculates disparity for each block. The object detection device 41 uses the first image I1 as a reference image and the second image as a comparison image to obtain a disparity image. The object detection device 41 extracts, for each pixel in the first image I1, the pixel in the second image that is most similar to the pixel in the first image I1. The distance between these matching pixels in the lateral direction is calculated as disparity. A disparity image in which each pixel of the first image I1, which is the reference image, is associated with disparity is thus obtained. The disparity image does not have to be displayed. The disparity image is data in which each pixel of the disparity image is associated with disparity. The object detection device 41 may perform a process of removing the disparities for the road surface from the disparity image. The object detection device 41, which performs step S1, corresponds to a disparity image obtainment portion.

Then, at step S2, the object detection device 41 derives the coordinates of the feature points in the world coordinate system. First, the object detection device 41 derives the coordinates of the feature points in the camera coordinate system. The camera coordinate system is a three-axis orthogonal coordinate system in which the optical axis is defined as the Z-axis, and two axes orthogonal to the optical axis are defined as the X-axis and the Y-axis. The coordinates of each feature point in the camera coordinate system are represented by a Z-coordinate $Zc$, an X-coordinate $Xc$, and a Y-coordinate $Yc$ in the camera coordinate system. The Z-coordinate $Zc$, the X-coordinate $Xc$, and the Y-coordinate $Yc$ are determined by the following Equations (1), (2) and (3), respectively.

$$Zc = \frac{B \times f}{d} \cdots (1)$$

$$Xc = (xp - x') \times \frac{Zc}{f} \cdots (2)$$

$$Yc = (yp - y') \times \frac{Zc}{f} \cdots (3)$$

In Equations (1) to (3), B represents the baseline [mm], f represents the focal length [mm], d represents the disparity [px], xp represents an arbitrary X-coordinate in the disparity image, x' represents the X-coordinate of the center of the disparity image, yp represents an arbitrary Y-coordinate in the disparity image, and y' represents the Y-coordinate of the center of the disparity image.

The coordinates of each feature point in the camera coordinate system are derived by defining xp as the X-coordinate of the feature point in the disparity image, defining yp as the Y-coordinate of the feature point in the disparity image, and defining d as the disparity associated with the coordinates of the feature point.

A three-axis orthogonal coordinate system having a Y-axis extending in the traveling direction of the forklift 10, a Z-axis extending in the vertical direction, and an X-axis extending orthogonal to the Y-axis and the Z-axis is defined as a world coordinate system, which is a three-dimensional coordinate system in real space. The coordinates of a feature point in the world coordinate system are represented by an X-coordinate Xw, a Y-coordinate Yw, and a Z-coordinate Zw in the world coordinate system.

The object detection device 41 uses Equation (4) below to perform world coordinate transformation that transforms camera coordinates into world coordinates.

$$\begin{pmatrix} Xw \\ Yw \\ Zw \end{pmatrix} = \begin{pmatrix} 1 & 0 & 0 \\ 0 & \cos\theta & -\sin\theta \\ 0 & \sin\theta & \cos\theta \end{pmatrix} \begin{pmatrix} Xc \\ Yc \\ Zc \end{pmatrix} + \begin{pmatrix} 0 \\ 0 \\ H \end{pmatrix} \cdots (4)$$

In Equation (4), H represents the installation height [mm] of the stereo camera 31 in the world coordinate system, and θ represents the sum of 90° and the angle formed by the optical axis of the camera 32, 33 and the horizontal plane.

In the world coordinates obtained by the world coordinate transformation, the X-coordinate Xw indicates the distance from the forklift 10 to the feature point in the left-right direction of the forklift 10. The Y-coordinate Yw indicates the distance from the forklift 10 to the feature point in the traveling direction of the forklift 10. The Z-coordinate Zw indicates the height of the feature point from the road surface.

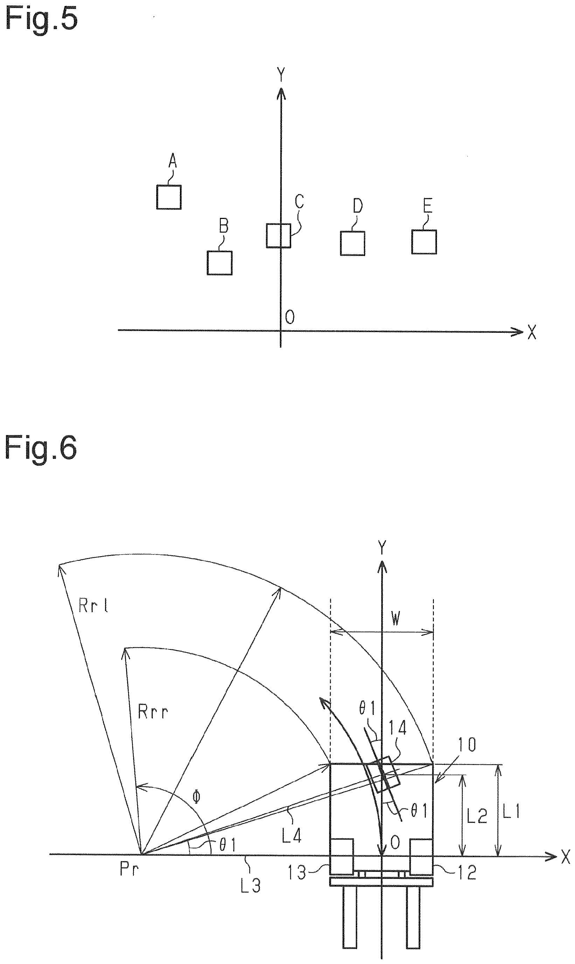

Then, at step S3, the object detection device 41 derives the X-coordinates Xw and the Y-coordinates Yw of the objects A, B, C, D and E on an XY-plane, which is a coordinate plane representing a horizontal plane in the world coordinate system. Various methods may be used to derive the X-coordinates Xw and the Y-coordinates Yw of the objects A, B, C, D and E on the XY-plane. For example, based on the world coordinates of the feature points derived at step S2, the object detection device 41 performs clustering that groups the feature points located within a predetermined area into one point group. The object detection device 41 considers each clustered point group to be an object A, B, C, D or E. The object detection device 41 identifies the X-coordinates Xw, the Y-coordinates Yw, and the Z-coordinates Zw of the objects A, B, C, D and E from the X-coordinates Xw, the Y-coordinates Yw, and the Z-coordinates Zw of the feature points in the clustered point groups. For example, the X-coordinates Xw, the Y-coordinates Yw, and the Z-coordinates Zw of the objects A, B, C, D and E may be the X-coordinates Xw, the Y-coordinates Yw, and the Z-coordinates Zw of multiple feature points located at ends of the respective clustered point groups, or may be the X-coordinates Xw, the Y-coordinates Yw, and the Z-coordinates Zw at the centers of the point groups. As shown in Fig. 5, the object detection device 41 projects the X-coordinates Xw, the Y-coordinates Yw, and the Z-coordinates Zw of the objects A, B, C, D and E onto the XY-plane of the world coordinate system, thereby deriving the X-coordinates Xw and the Y-coordinates Yw of the objects A, B, C, D and E on the XY-plane in the world coordinate system. That is, the object detection device 41 removes the Z-coordinates Zw from the X-coordinates Xw, the Y-coordinates Yw, and the Z-coordinates Zw of the objects A, B, C, D and E, so that the X-coordinates Xw and the Y-coordinates Yw of the objects A, B, C, D and E in the horizontal direction are derived. The object detection device 41, which performs step S3, corresponds to a coordinate deriving portion.

As shown in Figs. 4, 6, and 7, at step S4, the object detection device 41 derives an expected traveling region AP of the forklift 10. The expected traveling region AP is an area where the forklift 10 is expected to pass through when the forklift 10 continues to travel at the steering angle θ1 set at the time when step S4 is performed. The object detection device 41 obtains the detection result of the steering angle sensor 26 from the main controller 20. The object detection device 41 also obtains the detection result of the vehicle speed sensor 24 from the main controller 20. The detection result of the steering angle sensor 26 serves as steering angle information. The detection result of the vehicle speed sensor 24 serves as speed information. As such, the object detection device 41 corresponds to a steering angle obtainment portion and a speed obtainment portion.

The expected traveling region AP of the forklift 10 is derived from the steering angle θ1 and the dimension information of the forklift 10. First, the object detection device 41 derives expected traveling paths Rrr and Rrl from the steering angle θ1 and the dimension information of the forklift 10. The dimension information of the forklift 10 includes a dimension L1 [mm] from the central axis of the drive wheels 12 and 13 to the rear end of the vehicle body 11, a wheel base L2 [mm], and a vehicle width W [mm]. The dimension information of the forklift 10 is stored in the memory 22 of the main controller 20 or the storage portion 43 of the object detection device 41. When the memory 22 stores the dimension information of the forklift 10, the object detection device 41 obtains the dimension information of the forklift 10 from the main controller 20.

As can be understood from Fig. 6, the expected traveling paths Rrr and Rrl are derived as turning radii with respect to the turning center Pr. The expected traveling path Rrl at the left end of the vehicle body 11 and the expected traveling path Rrr at the right end of the vehicle body 11 are derived separately. The turning center Pr is the intersection of an imaginary line segment L3, which is an extension of the central axis of the drive wheels 12 and 13, and an imaginary line segment L4, which is an extension of the central axis of the steered wheels 14. The object detection device 41 derives the expected traveling paths Rrr and Rrl using Equations (5) and (6) below.

$$Rrr = \sqrt{\left(\frac{L2}{\tan\theta} - \frac{W}{2}\right)^2 + (L1)^2} \cdots (5)$$

$$Rrl = \sqrt{\left(\frac{L2}{\tan\theta} + \frac{W}{2}\right)^2 + (L1)^2} \cdots (6)$$

The X-coordinates Xw and the Y-coordinates Yw of the expected traveling paths Rrr and Rrl in the world coordinate system are derived from the expected traveling paths Rrr and Rrl, which are derived by Equations (5) and (6), and a turning angle Φ with respect to the line segment L3. The origin point O of the XY-plane is the center between the drive wheels 12 and 13. The turning angle Φ is formed by the line segment L3 at the current position and the line segment L3 at a position where the forklift 10 reaches after traveling from the current position at the same steering angle θ1. The turning angle Φ determines the extent of the derived expected traveling paths Rrr and Rrl from the current position. That is, the turning angle Φ determines the lengths of the expected traveling paths Rrr and Rrl in the traveling direction of the forklift 10.

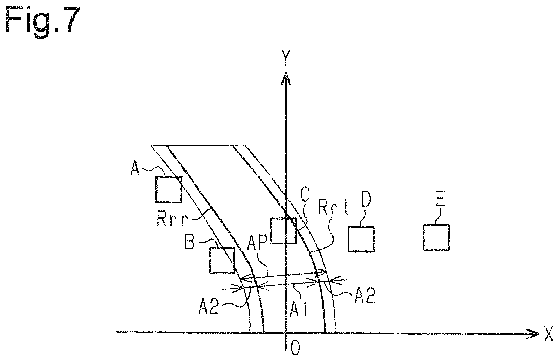

As shown in Fig. 7, a first region A1 extends between the expected traveling paths Rrr and Rrl, and second regions A2 extend outside the respective expected traveling paths Rrr and Rrl in the vehicle width direction of the forklift 10. The object detection device 41 defines the total width of these first and second regions A1 and A2 as the width of the expected traveling region AP. The second regions A2 located outside of the expected traveling paths Rrr and Rrl in the vehicle width direction serve as safety margins. The outside of the expected traveling region AP in the vehicle width direction of the forklift 10 is defined with respect to a position of the forklift 10 along the expected traveling paths Rrr and Rrl, not to the current position of the forklift 10. The expected traveling paths Rrr and Rrl are equal to the expected traveling region AP in the length in the traveling direction of the forklift 10. Accordingly, the turning angle Φ determines the length of the expected traveling region AP in the traveling direction of the forklift 10.

In the present embodiment, the turning angle Φ and the width of the expected traveling region AP change with the speed of the forklift 10. The object detection device 41 increases the turning angle Φ as the speed of the forklift 10 increases. The storage portion 43 of the object detection device 41 stores a map or a relational expression regarding the relationship between the speed of the forklift 10 and the turning angle Φ. This allows the object detection device 41 to derive the turning angle Φ from the speed of the forklift 10. The map or the relational expression is set so as to give a value that is greater than the turning angle estimated assuming that the forklift 10 continues to travel over the control cycle at the speed set at the time when step S4 is performed. A greater turning angle Φ results in a longer expected traveling region AP in the traveling direction of the forklift 10.

The object detection device 41 widens the second regions A2 as the speed of the forklift 10 decreases. The storage portion 43 of the object detection device 41 stores a map or a relational expression regarding the relationship between the speed of the forklift 10 and the second regions A2. This allows the object detection device 41 to derive the size of the second regions A2 from the speed of the forklift 10. A wider second region A2 results in a wider expected traveling region AP in the vehicle width direction of the forklift 10. The object detection device 41, which performs step S4, corresponds to an expected traveling region deriving portion.

As shown in Fig. 4, at step S5, the object detection device 41 extracts priority objects A, B and C, which are the objects A, B and C located in the expected traveling region AP. Step S3 derives the X-coordinates Xw and the Y-coordinates Yw of the objects A, B, C, D and E in the world coordinate system. Step S4 derives the X-coordinates Xw and the Y-coordinates Yw of the expected traveling region AP in the world coordinate system. This allows the object detection device 41 to identify the positional relationship between them.

Fig. 7 shows the relationship between the coordinates of the objects A, B, C, D and E and the coordinates of the expected traveling region AP on the XY-plane of the world coordinate system. As can be understood from Fig. 7, the priority objects A, B and C are located in the expected traveling region AP. The phrase "an object is located in the expected traveling region AP" refers to a situation where at least a part of the object is located within the coordinates of the expected traveling region AP on the XY-plane in the world coordinate system. The object detection device 41, which performs step S5, corresponds to an extraction portion.

As shown in Fig. 4, at step S6, the object detection device 41 sets priority levels for the objects A, B, C, D and E. The object detection device 41 derives the distances from the forklift 10 to the objects A, B, C, D and E. The distances from the forklift 10 to the objects A, B, C, D and E are the Euclidean distances from the origin point O to the coordinates of the objects A, B, C, D and E. The object detection device 41 prioritizes the priority objects A, B and C by assigning a higher priority level to an object closer to the forklift 10. The object detection device 41 assigns the highest priority level to the priority object B, the second highest priority level to the priority object C, and the third highest priority level to the priority object A. It is optional to assign priority levels to the objects D and E other than the priority objects A, B and C. When priority levels are assigned to the objects D and E, a higher priority level may be assigned to the object closer to the forklift 10 or to the object closer to the expected traveling region AP. That is, the objects other than the priority objects A, B and C may be handled in any manner.

At step S7, the object detection device 41 performs a human detection process that determines whether an object A, B, C, D or E is a human. The object detection device 41 gives the highest priority to the priority object B, which is closest to the forklift 10, and thus first determines whether the priority object B is a human. Then, the object detection device 41 performs the human detection process on the other objects A, C, D and E within the control cycle. Following the order of priority levels, the object detection device 41 performs the human detection process in the order of the priority object B, the priority object C, and the priority object A. The human detection process may be performed also on the objects D and E other than the priority objects A, B and C if more time remains in the control cycle. The object detection device 41 stops the object detection process when the control cycle has elapsed. The object detection device 41 stops the object detection process when the control cycle ends even if the human detection process is not performed on the objects A, C, D and E other than the priority object B, which is closest to the forklift 10.

As described above, the priority objects A, B and C have priority over the objects D and E, which differ from the priority objects A, B and C, for human/non-human determination. As described above, the term "priority" includes an aspect in which the priority objects A, B and C are determined whether they are humans before the objects D and E, which differ from the priority objects A, B and C.

The following process may be performed to determine whether an object A, B, C, D or E is a human. First, the object detection device 41 transforms the world coordinates of the object A, B, C, D or E into camera coordinates. Equation (7) below is used to transform world coordinates to camera coordinates.

$$\begin{pmatrix} Xc \\ Yc \\ Zc \end{pmatrix} = \begin{pmatrix} 1 & 0 & 0 \\ 0 & \cos\theta & -\sin\theta \\ 0 & \sin\theta & \cos\theta \end{pmatrix}^{-1} \left( \begin{pmatrix} Xw \\ Yw \\ Zw \end{pmatrix} - \begin{pmatrix} 0 \\ 0 \\ H \end{pmatrix} \right) \,...\,(7)$$

Assigning the world coordinates of the object A, B, C, D or E to t coordinate Xw, the Y coordinate Yw, and the Z coordinate Zw in Equation (7) gives the camera coordinates of the object A, B, C, D or E. In the present embodiment, since the world coordinates of the object A, B, C, D or E are coordinates on the XY-plane, the Z-coordinate Zw is zero.

Then, using Equations (8) and (9) below, the object detection device 41 derives, from the camera coordinates, the coordinates of the object A, B, C, D or E in the first image I1.

$$xp = Xc \times \frac{f}{Zc} + x' \cdots (8)$$

$$yp = y' - Yc \times \frac{f}{Zc} \cdots (9)$$

Assigning the camera coordinates of the object A, B, C, D or E to the X coordinate Xc, the Y coordinate Yc, and the Z coordinate Zc in Equations (8) and (9) gives the coordinates of the object A, B, C, D or E in the first image I1.

The object detection device 41 performs the human detection process on the coordinates of the object A, B, C, D or E in the first image I1 to determine whether the object A, B, C, D or E is a human. In addition to the coordinates derived by Equations (8) and (9), the coordinates of the object A, B, C, D or E in the first image I1 may include the coordinates around the obtained coordinates. The human detection process is performed by a feature extraction method that extracts features from the first image 11. For example, the histogram of oriented gradients (HOG) or the scale-invariant feature transform (SIFT) may be used. The object detection device 41 thus determines whether the object A, B, C, D or E is a human or a non-human object. The positional relationship between the forklift 10 and the object A, B, C, D or E is derived at step S3 and is thus identified by the object detection device 41. The object detection device 41, which performs step S7, corresponds to a human determination portion.

As described above, the object detection device 41 includes, as functional elements, the disparity image obtainment portion, the coordinate deriving portion, the steering angle obtainment portion, the expected traveling region deriving portion, the extraction portion, the human determination portion, and the speed obtainment portion.

The operation of the present embodiment is now described.

The object detection device 41 derives the expected traveling region AP of the forklift 10 in the world coordinate system from the steering angle information and the dimension information of the forklift 10. Of the objects A, B, C, D and E, the objects that will hinder the traveling of the forklift 10 are the priority objects A, B and C located in the expected traveling region AP. The priority objects A, B and C located in the expected traveling region AP are extracted in the world coordinate system, and the human detection process is performed by giving priority to the coordinates of the priority objects A, B and C over the coordinates of the objects D and E in the first image 11. This allows for prompt detection of a human who will hinder the traveling.

When the detected object A, B, C, D or E is a human, the forklift 10 may perform a process different from the process performed when the object A, B, C, D or E is not a human. For example, when the monitoring device 30 detects a human, the main controller 20 may notify the driver that a human is nearby. The notification may be performed in any manner, such as through a display device that displays a notification, or a buzzer that sounds a notification. Further, the main controller 20 may notify the people around the forklift 10 that the forklift 10 is nearby.

The object detection process is repeated for each predetermined control cycle. In the object detection process, the human detection process for determining whether the objects A, B, C, D and E are humans involves a large processing load. Performing the human detection process on the entire area of the first image I1 would result in a large processing load. The forklift 10 makes sharp turns more frequently than a passenger car, and the stereo camera 31 typically has a wider angle of view than a stereo camera mounted on a passenger car. Consequently, the object detection device 41 mounted on the forklift 10 is likely to perform the human detection process on a large region, increasing the processing load.

When the processing load is large, one control cycle may end before the human detection process is performed on all objects A, B, C, D and E. If the human detection process is performed in order of decreasing closeness to the forklift 10 regardless of the expected traveling region AP, an object that will not hinder the traveling can be subjected to the human detection process before an object that will hinder the traveling. Consequently, the object detection device 41 may fail to perform the human detection process on an object that will hinder the traveling, resulting in failure or delay in detecting a human who will hinder the traveling. In order to perform the human detection process on all objects in the first image I1 without extending the control cycle, the object detection device 41 requires a high processing capability. This increases the manufacturing costs. In order to perform the human detection process on all objects in the first image I1 in one control cycle without increasing the processing capability of the object detection device 41, the control cycle needs to be longer. This delays the detection of a human who will hinder the traveling.

In the present embodiment, the priority objects A, B and C have priority for determination as to whether they are humans. In addition, the present embodiment gives the highest priority to the priority object B, which is one of the priority objects A, B and C that is closest to the forklift 10, and determines whether the priority object B is a human before the other objects. This ensures that determination as to whether the priority object B, which is closest to the forklift 10, is a human is made in the control cycle. Of the priority objects A, B and C located in the expected traveling region AP, the priority object B closest to the forklift 10 is the object that may hinder the traveling of the forklift 10 soon. In contrast, the priority objects A and C, which differ from the priority object B closest to the forklift 10 among the priority objects A, B and C, are farther from the forklift 10 than the closest priority object B. In addition, after the forklift 10 moves past the priority object B, the priority objects A and C can be the priority object that is closest to the forklift 10. As such, if the priority objects A and C will hinder the traveling of the forklift 10, they are subjected to the human detection process in the next or subsequent control cycle. The priority objects A and C are therefore assigned lower priority levels than the closest priority object B in the human detection process. Further, the objects D and E that are not located in the expected traveling region AP are less likely to hinder the traveling as compared with the priority objects A and C. If any factor, such as a change in the steering angle $\theta 1$ of the forklift 10 or movement of the forklift 10 or the object D or E, places the object D or E in a position that will hinder the traveling, the object D or E becomes a priority object in the next or subsequent control cycle. The objects D and E, which are not located in the expected traveling region AP, thus have lower priority levels in the human detection process. As described above, the forklift 10 will function without any problems as long as the object detection process, which is repeated for each control cycle, at least determines whether the priority object B closest to the forklift 10 is a human. Further, the object detection device 41 may determine whether the priority objects A and C, which differ from the priority object B closest to the forklift 10, are humans if this is possible within the control cycle. This further increases the reliability in operation of the forklift 10.

Since the object detection device 41 only needs to determine whether the priority object B closest to the forklift 10 is a human, the processing load is reduced as compared with a configuration that performs the human detection process on all objects A, B, C, D and E. In addition, the control cycle needs only to be long enough to make determination as to whether the priority object B closest to the forklift 10 is a human. Thus, the control cycle can be shorter than that in a configuration that performs the human detection process on all objects A, B, C, D and E within one control cycle.

The present embodiment has the following advantages.

(1) The object detection device 41 determines whether objects are humans by giving priority to the priority objects A, B and C over the objects D and E, which differ from the priority objects A, B and C. This allows for prompt detection of a human who will hinder the traveling. Further, the human detection process uses images captured by the stereo camera 31. If the human detection process is performed using an image captured by a monocular camera, the human detection process is performed on the entire region in the image that corresponds to the expected traveling region AP, and then the coordinates in real space of the regions where humans are detected are derived. Accordingly, the human detection process is performed on a large region, increasing the processing load on the object detection device 41. In contrast, when images captured by the stereo camera 31 are used, the coordinates of the objects A, B, C, D and E in the first image I1 can be derived before the human detection process is performed. Thus, the human detection process is performed on a smaller region than that in a configuration that uses an image captured by a monocular camera. The stereo camera 31 reduces the processing load on the object detection device 41 as compared with a monocular camera. In addition, when a monocular camera is used, it is necessary to know in advance where a person appears in the image according to the lens and the installation position of the monocular camera. Use of the stereo camera 31 eliminates the need to know in advance where a person appears in the image.

(2) Determination as to whether objects are humans is made by giving the highest priority to the priority object B, which is one of the priority objects A, B and C that is closest to the forklift 10. Of the humans captured in the first image I1, it is desirable that a human closer to the forklift 10 is detected earlier. Giving the highest priority to the priority object B, which is one of the priority objects A, B and C that is closest to the forklift 10, allows for prompt detection of a human who is closest to the forklift 10 among the humans who will hinder the traveling.

(3) The object detection device 41 increases the length of the expected traveling region AP as the speed of the forklift 10 increases. A faster speed of the forklift 10 reduces the distance between the forklift 10 and a person in a shorter time, causing the forklift 10 coming close to the person in one control cycle. Increasing the length of the expected traveling region AP as the speed of the forklift 10 increases enables the object detection device 41 to detect a human before the distance between the human and the forklift 10 becomes excessively short.

(4) The object detection device 41 widens the expected traveling region AP in the vehicle width direction as the speed of the forklift 10 decreases. The forklift 10 can turn more easily at a lower speed, so that a change in the traveling direction may position the forklift 10 far from the expected traveling paths Rrr and Rrl in the next or subsequent control cycle. Widening the expected traveling region AP in the vehicle width direction as the speed of the forklift 10 decreases enables the object detection device 41 to detect a human in a manner suitable to the speed of the forklift 10.

More specifically, the expected traveling region AP is widened in the vehicle width direction when the traveling direction of the forklift 10 is more easily changed by a change in the steering angle $\theta 1$. This allows the object detection device 41 to promptly detect a human on the potential path of the forklift 10.

The embodiment may be modified as follows. The embodiment and the following modifications may be combined to the extent that does not cause technical contradiction.

The turning angle Φ does not have to be changed according to the speed of the forklift 10. That is, the turning angle Φ may be a fixed value. In this case, the turning angle Φ may be set according to the maximum speed of the forklift 10 and the control cycle, for example. The turning angle Φ may be set to a value that is larger than the turning angle that results when the forklift 10 travels at the maximum speed over the control cycle.

The width of the expected traveling region AP in the vehicle width direction does not have to be changed according to the speed of the forklift 10. That is, the width of the expected traveling region AP in the vehicle width direction may be a fixed value. In this case, the width of the expected traveling region AP in the vehicle width direction may be set according to the control cycle, for example. The width of the expected traveling region AP in the vehicle width direction may be widened when the control cycle is longer, and the width of the expected traveling region AP in the vehicle width direction may be reduced when the control cycle is shorter. A longer control cycle results in a greater change in the position of the forklift 10 relative to the objects A, B, C, D and E during the object detection process. As such, detection of an object that will hinder the traveling may be performed on a larger area when the control cycle is longer.

As long as the expected traveling region AP includes at least the first region A1, the second regions A2 as safety margins may be omitted.

The object detection device 41 may use a detection result of a steering wheel angle sensor as the steering angle information. The steering wheel angle sensor detects the angle of the steering wheel and outputs the detection result to the main controller 20. Since the steering angle is controlled according to the detection result of the steering wheel angle sensor, the steering angle can be detected from the detection result of the steering wheel angle sensor.

The object detection device 41 may be configured to determine whether each of the priority objects A, B and C is a human, but not to determine whether an object other than the priority objects A, B and C is a human. That is, the term "priority" includes an aspect in which determination as to whether an object is a human is made only for the priority objects A, B and C.

As long as the object detection device 41 determines whether the priority object B closest to the forklift 10 is a human, the object detection device 41 does not have to determine whether the other objects A, C, D and E are humans even if more time remains in the control cycle after completing the determination process on the priority object B. That is, of the priority objects A, B and C, only the priority object B closest to the forklift 10 may have priority.

The object detection device 41 may make human/non-human determination simultaneously for multiple objects among the objects A, B, C, D and E. In this case, of the objects A, B, C, D and E, the group of the objects that is subjected to the determination process first includes the priority object B closest to the forklift 10.

The object detection device 41 does not have to give the highest priority to the priority object B closest to the forklift 10 for human/non-human determination.
For example, the priority object B, which is one of the priority objects A, B and C that is closest to the forklift 10, may have the second highest priority for human/non-human determination.

The monitoring device 30 may detect a human in front of the forklift 10. In this case, the stereo camera 31 is arranged so as to capture an image in front of the forklift 10. The object detection device 41 performs the object detection process when the forklift 10 moves forward. Further, the monitoring device 30 may detect objects at both the front and rear sides of the forklift 10. In this case, the forklift 10 includes a stereo camera 31 for capturing the area in front of the forklift 10 and also a stereo camera 31 for capturing the area behind the forklift 10. The object detection device 41 detects objects located in the traveling direction of the forklift 10.

The determination as to whether the objects A, B, C, D and E are humans may be made by a human determination portion that has learned data through machine learning using a supervised learning model. The human determination portion may be a supervised learner that uses a method such as support vector machine, neural network, naive Bayes, deep learning, or decision tree. The teaching data used in the machine learning may include shape elements of humans extracted from images and image inherent components including appearance elements. The shape elements may include the sizes and contours of humans. The appearance elements may include information such as light source information, texture information, and camera information. The light source information includes information on reflectance and shadow, for example. The texture information includes color information, for example. The camera information includes information on the image quality, the resolution, and the angle of view, for example.

The embodiment determines whether an object A, B, C, D or E is a priority object A, B or C based on the coordinates of the object A, B, C, D or E on the XY-plane in the world coordinate system. Instead, the coordinates in the three-axis orthogonal coordinate system may be used to determine whether the object A, B, C, D or E is a priority object A, B or C. The coordinates of the object A, B, C, D or E in the three-axis orthogonal coordinate system include a Z-coordinate Zw. The coordinates of the expected traveling region AP are derived as X-coordinates Xw and Y-coordinates Yw. In this case, the object detection device 41 uses the X-coordinates Xw and the Y-coordinates Yw of the expected traveling region AP and the X-coordinate Xw and the Y-coordinate Yw of the object A, B, C, D or E to determine whether the object is in the expected traveling region AP. That is, when the coordinates of the object A, B, C, D or E in the three-axis orthogonal coordinate system are used to determine whether the object A, B, C, D or E is a priority object A, B or C, it is not necessary to consider the Z-coordinate Zw of the object A, B, C, D or E.

The region for obtaining the disparity image may be changed according to the steering angle θ1 of the forklift 10. For example, when the steering angle θ1 of the forklift 10 indicates that the forklift 10 is turning to the left, each of the first image I1 and the second image may be divided into three equal parts in the lateral direction and disparity may be obtained only for the two left parts. That is, disparity does not have to be calculated for a region that is free of a priority object in images captured by the stereo camera 31. This further reduces the processing load on the object detection device 41.

The forklift 10 may be a type that automatically travels and handles materials. In this case, information on whether the forklift 10 is moving forward or backward can be obtained from the main controller 20. When the forklift 10 automatically travels and handles materials, the traveling route or the vehicle speed may vary depending on whether the objects A, B, C, D and E are humans. For example, when an object A, B, C, D or E is a human, as compared to when the object is not a human, the main controller 20 may increase the avoidance distance or reduce the vehicle speed when traveling near the object. Further, the forklift 10 may be switchable between automatic operation and manual operation.

The detection result of the vehicle speed sensor 24 may be used to determine whether the forklift 10 is moving forward or backward.

The world coordinate system is not limited to the orthogonal coordinate system, and may be a polar coordinate system.

The human detection may be performed on the second image of the images captured by the stereo camera 31. In this case, the object detection device 41 derives the coordinates of the objects A, B, C, D and E in the second image. However, since the second image is a comparison image, the coordinates of the objects A, B, C, D and E in the image derived from the world coordinates of the objects A, B, C, D and E are shifted according to the baseline. As such, the object detection device 41 corrects the coordinates of the objects in the second image according to the baseline, and performs the human detection process on the corrected coordinates.

Candidates for humans may be extracted from the objects A, B, C, D and E, and the human detection process may be performed only on these candidates. The dimensions of the objects A, B, C, D and E on the XY-plane may be used to determine whether the objects A, B, C, D and E are candidates for humans.

The disparity image obtainment portion, the coordinate deriving portion, the expected traveling region deriving portion, the extraction portion, and the human determination portion may be mutually different controllers.

Table data may be used to transform camera coordinates into world coordinates. The table data includes table data that associates Y-coordinates $Y_w$ with combinations of Y-coordinates $Y_c$ and Z-coordinates $Z_c$, and table data that associates Z-coordinates $Z_w$ with combinations of Y-coordinates $Y_c$ and Z-coordinates $Z_c$. Storing such table data in the ROM or the like of the object detection device 41 allows the Y-coordinates $Y_w$ and the Z-coordinates $Z_w$ in the world coordinate system to be obtained from the Y-coordinates $Y_c$ and the Z-coordinates $Z_c$ in the camera coordinate system. In the same manner, world coordinates may be transformed into camera coordinates using the table data.

The first camera 32 and the second camera 33 may be arranged in the vertical direction.

The number of pixels in the first image I1 may differ from the number of pixels in the second image. For example, the number of pixels in the second image as the comparison image may be the same as the number of pixels in the disparity image, and the number of pixels in the first image I1 as the reference image may be larger than the number of pixels in the second image.

The stereo camera 31 may include three or more cameras.

The forklift 10 may be driven by an engine to travel. In this case, the traveling controller may be a device that controls the amount of fuel injected into the engine.

The forklift 10 may be a four-wheel forklift. In this case, the object detection device 41 derives the expected traveling paths Rrr and Rrl using equations for deriving the expected traveling paths Rrr and Rrl of the four-wheel forklift. That is, the equations for deriving the expected traveling paths Rrr, Rrl vary depending on the type of the vehicle.

The forklift 10 may be a forklift capable of selecting a traveling mode from multiple traveling modes such as a traverse mode and a translational movement mode. In this case, the monitoring device 30 includes a stereo camera that can be oriented in the traveling direction of each traveling mode. The object detection device 41 stores in the storage portion 43 equations for deriving the expected traveling paths for each traveling mode, and derives the expected traveling paths using the equations corresponding to the traveling mode. In this case, the object detection device 41 obtains information on a change in the traveling mode from the main controller 20 and derives the expected traveling region AP according to the traveling mode.

The object detection device 41 may be mounted on a vehicle such as a passenger car or an industrial vehicle other than the forklift 10, which may be construction equipment, an automatic delivery vehicle, or a truck.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

**Claims**

1. An object detection device (41) configured to be mounted on a vehicle (10), the object detection device (41) comprising:

   a disparity image obtainment portion (41) configured to obtain, from an image captured by a stereo camera (31), a disparity image in which each of pixels is associated with disparity;
   a coordinate deriving portion (41) configured to derive, from the disparity image, coordinates of objects in a world coordinate system, which is a coordinate system in real space;
   a steering angle obtainment portion (41) configured to obtain steering angle information of the vehicle (10);
   an expected traveling region deriving portion (41) configured to derive an expected traveling region (AP) of the vehicle (10) in the world coordinate system from the steering angle information and dimension information of the vehicle (10);
   an extraction portion configured to extract a priority object, which is one of the objects that are located in the expected traveling region (AP) in the world coordinate system; and
   a human determination portion (41) configured to perform a human detection process on coordinates of the objects in the image by giving priority to the priority object over each of the objects that differs from the priority object.

2. The object detection device (41) according to claim 1, wherein the human determination portion (41) is configured to perform the human detection process on the coordinates of the objects in the image by giving highest priority to the priority object that is closest to the vehicle (10).

3. The object detection device (41) according to claim 1 or 2, wherein the expected traveling region deriving portion (41) is configured to increase a length of the expected traveling region (AP) in a traveling direction of the vehicle (10) as a speed of the vehicle (10) increases.

4. The object detection device (41) according to any one of claims 1 to 3, wherein the expected traveling region deriving portion (41) is configured to widen the expected traveling region (AP) in a vehicle (10) width direction of the vehicle (10) as a speed of the vehicle (10) decreases.

5. A method for detecting an object using an object detection device (41) configured to be mounted on a vehicle (10), the method comprising:

   obtaining, from an image captured by a stereo camera (31), a disparity image in which each of pixels is associated with disparity;
   deriving, from the disparity image, coordinates of objects in a world coordinate system, which is a coordinate system in real space;
   obtaining steering angle information of the vehicle (10);
   deriving an expected traveling region (AP) of the vehicle (10) in the world coordinate system from the steering angle information and dimension information of the vehicle (10);
   extracting a priority object, which is one of the objects that are located in the expected traveling region (AP) in the world coordinate system; and
   performing a human detection process on coordinates of the objects in the image by giving priority to the priority object over each of the objects that differs from the priority object.

# Fig.1

# Fig.2

# Fig.3

# Fig.4

```
            ┌──────────────┐
            │    START     │
            └──────┬───────┘
                   ↓
    ┌────────────────────────────────┐
    │    Obtain disparity image       │ ~S1
    └────────────────┬───────────────┘
                     ↓
    ┌────────────────────────────────┐
    │ Derive coordinates of feature points │ ~S2
    └────────────────┬───────────────┘
                     ↓
    ┌────────────────────────────────┐
    │    Derive coordinates of object  │ ~S3
    │    in world coordinate system    │
    └────────────────┬───────────────┘
                     ↓
    ┌────────────────────────────────┐
    │  Derive expected traveling region │ ~S4
    └────────────────┬───────────────┘
                     ↓
    ┌────────────────────────────────┐
    │      Extract priority object     │ ~S5
    └────────────────┬───────────────┘
                     ↓
    ┌────────────────────────────────┐
    │        Set priority level        │ ~S6
    └────────────────┬───────────────┘
                     ↓
    ┌────────────────────────────────┐
    │      Human detection process     │ ~S7
    └────────────────┬───────────────┘
                     ↓
            ┌──────────────┐
            │     END      │
            └──────────────┘
```

Fig.5

Fig.6

Fig.7

Europäisches
Patentamt

European
Patent Office

Office européen
des brevets

# EUROPEAN SEARCH REPORT

Application Number

EP 20 16 5183

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 115 966 A1 (RICOH CO LTD [JP]) 11 January 2017 (2017-01-11) * paragraph [0001] * * paragraph [0014] - paragraph [0017] * * paragraph [0031] * * paragraph [0079] - paragraph [0081] * * figures 1-3 * ----- | 1-5 | INV. G06K9/00 |
| Y | US 2010/099353 A1 (KOMORI TERUMOTO [JP]) 22 April 2010 (2010-04-22) * paragraph [0047] - paragraph [0048] * ----- | 1-5 | |

TECHNICAL FIELDS
SEARCHED (IPC)

G06K

The present search report has been drawn up for all claims

| Place of search | Date of completion of the search | Examiner |
|---|---|---|
| The Hague | 24 August 2020 | De Coi, Juri |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 3 716 145 A1**

## ANNEX TO THE EUROPEAN SEARCH REPORT
## ON EUROPEAN PATENT APPLICATION NO.

EP 20 16 5183

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2020

| Patent document cited in search report | | Publication date | Patent family member(s) | | Publication date |
|---|---|---|---|---|---|
| EP 3115966 | A1 | 11-01-2017 | EP 3115966 A1 | | 11-01-2017 |
| | | | JP 6592991 B2 | | 23-10-2019 |
| | | | JP 2017016584 A | | 19-01-2017 |
| US 2010099353 | A1 | 22-04-2010 | CN 101632109 A | | 20-01-2010 |
| | | | EP 2122598 A2 | | 25-11-2009 |
| | | | JP 4345832 B2 | | 14-10-2009 |
| | | | JP 2008225786 A | | 25-09-2008 |
| | | | KR 20090118059 A | | 17-11-2009 |
| | | | US 2010099353 A1 | | 22-04-2010 |
| | | | WO 2008110926 A2 | | 18-09-2008 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017151815 A